(19) Europäisches Patentamt
European Patent Office
Office européen des brevets

(11) **EP 4 368 966 B1**

(12) **EUROPÄISCHE PATENTSCHRIFT**

(45) Veröffentlichungstag und Bekanntmachung des Hinweises auf die Patenterteilung:
**04.06.2025   Patentblatt 2025/23**

(21) Anmeldenummer: **22206742.3**

(22) Anmeldetag: **10.11.2022**

(51) Internationale Patentklassifikation (IPC):
**G01N 15/10** (2024.01)        **G01N 15/14** (2024.01)

(52) Gemeinsame Patentklassifikation (CPC):
**G01N 15/1429; G01N 15/0205;** G01N 2015/1027;
G01N 2015/1493

(54) **VERFAHREN UND VORRICHTUNG ZUR ERFASSUNG EINES PARTIKELS**

METHOD AND DEVICE FOR DETECTING A PARTICLE

PROCÉDÉ ET DISPOSITIF DE DÉTECTION D'UNE PARTICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**15.05.2024   Patentblatt 2024/20**

(73) Patentinhaber: **Endress+Hauser SICK GmbH+Co. KG**
**01458 Ottendorf-Okrilla (DE)**

(72) Erfinder:
• **Seilmayer, Martin**
**01909 Großhartau (DE)**
• **Jahn, Dominik**
**01640 Coswig (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
US-A1- 2011 221 892        US-A1- 2017 191 923
US-A1- 2017 322 137        US-A1- 2022 003 657

**Beschreibung**

Die Erfindung betrifft ein Verfahren und eine Vorrichtung zur Erfassung eines oder mehrerer Partikel. Insbesondere betrifft die vorliegende Erfindung ein Verfahren und eine Vorrichtung, die ausgebildet sind, das Auftreten eines Partikels anhand einer charakteristischen Signatur zu erkennen.

Verfahren und Vorrichtungen zur Erfassung eines Partikels sind prinzipiell bekannt. Aus der Druckschrift DE 10 2019 209 213 A1 ist beispielsweise eine Sensoranordnung zur Detektion und Charakterisierung von Partikeln bekannt. Diese Sensoranordnung verwendet insbesondere eine charakteristische Feldverteilung eines Laserstrahls, der an jeder Position eine unterschiedliche Kombination aus einer lokalen Intensität und einer lokalen Polarisationsrichtung aufweist. Der Grad der Polarisation (engl. degree of polarization, DOP) ist hier eine der Messgrößen.

Die Auswerteeinrichtung gemäß der DE 10 2019 209 213 A1 nutzt dabei insbesondere die Bildung eines Summen-Signals oder eines Differenz-Signals, um eine Partikel-Trajektorie, bestehend aus Partikel-Position, Partikel-Geschwindigkeit und eine Partikel-Beschleunigung in zwei Raumrichtungen zu bestimmen. Die Partikelgröße lässt sich aus dem Amplitudenwert der Euklidischen Summe ( $\sqrt{x^2+y^2}$ ) der Signalkomponenten ermitteln.

Jedes Partikel wird durch eine charakteristische Signatur dargestellt. Die in der DE 10 2019 209 213 A1 offenbarte Methode zur Bestimmung von Partikeleigenschaften ist jedoch fehleranfällig, insbesondere in Bezug auf falsch-positive Partikeldetektionen. Weiterhin sind mehrere Einstellparameter notwendig, um das Detektionsverfahren auf Eigenschaften, wie zum Beispiel Rauschverhalten, des Datensatzes zu kalibrieren.

Die Druckschrift US 2011 / 0 221 892 A1 offenbart ein Verfahren zur Berechnung eine Tropfverzögerung in einem Strahl mittels Durchflusszytometrie. In der Druckschrift US 2017 / 0 322 137 A1 ist ein Verfahren und ein System zur Charakterisierung von Partikeln unter Verwendung von Durchflusszytometrie offenbart.

Systeme und Verfahren zur Detektion von Partikeln sind den Druckschriften US 2022 / 0 003 657 A1 und US 2017 / 0 191 923 A1 zu entnehmen.

Es ist daher eine Aufgabe, ein verbessertes Verfahren und eine verbesserte Vorrichtung zur Erfassung von Partikeln anzugeben.

Diese Aufgabe wird gelöst durch ein Verfahren gemäß Anspruch 1, umfassend das Erfassen einer Zeitreihe einer Partikelerfassung, Segmentieren der Zeitreihe und Klassifizieren der Segmente der Zeitreihe.

Das Segmentieren der Zeitreihe umfasst dabei ein Transformieren der Zeitreihe in einen transformierten Merkmalsraum, der auch als Originalraum oder τ-Raum bezeichnet werden kann, ein Tiefpassfiltern des transformierten Raums, insbesondere des transformierten Signals, und ein Rücktransformieren des transformierten Raums, insbesondere des Signals in den Zeitbereich.

Das Klassifizieren der Segmente der Zeitreihe umfasst dabei ein Bestimmen eines oder mehrerer Peaks, insbesondere eines oder mehrerer Doppel-Peaks, in der erfassten (originalen) Zeitreihe basierend auf dem tiefpassgefilterten und rücktransformierten Signal aus dem Merkmalsraum. Insbesondere liefert die Segmentierung die Position eines oder mehrerer Peaks bzw. Doppel-Peaks, die dann in der originalen Zeitreihe, wie diese ursprünglich erfasst wurde, aufgefunden und dort klassifiziert werden. Es wird hier die originale Zeitreihe anstelle der transformierten bzw. rücktransformierten zugrunde gelegt, da in dem rücktransformierten Raum aufgrund der Transformation die Signalhöhe verfälscht ist.

Ob es sich um einen oder mehrere einzelne Peaks oder einen oder mehrere Doppel-Peaks handelt, liegt insbesondere an der Art der Erfassung der Zeitreihe und ob pro Partikel ein oder mehrere Ausschläge detektiert werden. Im Folgenden wird insbesondere auf das Beispiel mit einem oder mehreren charakteristischen Doppel-Peaks eingegangen, wobei die Lehren auch sinngemäß auf Zeitreihen mit charakteristischen Einzel-Peaks anwendbar sind.

Auf Basis dieser Berechnungen kann dann bestimmt werden, ob tatsächlich ein Partikel erfasst wurde oder ob es sich um eine falsch-positive Erfassung handelt. Grundsätzlich kann durch das Verfahren (und auch durch die unten erläuterte Vorrichtung) ein Signal ausgegeben werden, das die Erfassung eines Partikels meldet und/oder das angibt, wie viele Partikel erfasst wurden.

Erfindungsgemäß wird zunächst das Auftreten eines oder mehrerer Partikel über die Zeit in einer Zeitreihe erfasst.

Dabei werden in der Zeitreihe charakteristische Merkmale, die aus einer charakterisierenden Messgröße abgeleitet werden können, abgebildet, zum Beispiel ein Polarisationsgrads eines Laserstrahls oder eine Intensitätsverteilung einer elektromagnetischen Strahlung, welche sich aufgrund einer Abdeckung durch ein Partikel ändert. Diese Änderung kann durch einen geeigneten Detektor, wie CCD-Kameras, Photodioden oder Infrarotkameras erfasst und über die Zeit aufgezeichnet werden. Auch Änderungen von digitalisierten Impulsen, wie Elektrokardiogramme oder Geigerzähler-Impulse können eine Grundlage für die Zeitreihe dienen. Dabei ist der Begriff Partikel nicht auf die Größe beschränkt. Mit dem erfindungsgemäßen Verfahren können auch andere Objekte, wie beispielsweise Gegenstände erfasst werden, die, insbesondere zufällig, entlang einer Zeitreihe auftreten.

Die Partikel tauchen zufällig an einem Detektor auf und erzeugen eine von der Partikelgröße abhängige Amplitude. Aus dem Messprinzip lässt sich ableiten, dass kontinuierliche Zufallsprozesse für das Auftreten der Ereignisse, der Partikelgröße und der Partikelgeschwindigkeit vorliegen. Die Sensoranordnung erfasst einzelne Realisierungen dieser Eigenschaften und tastet so die entsprechenden Verteilungsfunktionen des beobachten Zufallsprozesses ab. Die Zeitreihe selbst lässt sich aber als unstetig betrachten, da Einzelimpulse auftreten, die sich idealerweise nicht überlagern. Im Zeitraum zwischen den Ereignissen ist der Messeffekt demnach nicht existent, es wird also nur das Detektorrauschen aufgezeichnet.

Alle weiteren Schritte, insbesondere das Segmentieren und das Klassifizieren sowie deren nachfolgend beschriebenen Teilschritte erfolgen durch einen geeigneten Prozessor.

Die Signalverarbeitung der Datensegmentierung erfolgt zum Teil im Frequenz-transformierten τ-Raum, der nachfolgend als Originalbereich bezeichnet wird. Der ursprünglichen Zeitreihe selbst wird hier die Eigenschaft Bildbereich zugeordnet, so dass die Fourier-Transformation (FT) eine eindeutige mathematische Beziehung $DOP(t) = \mathcal{F}(dop(\tau))$ zwischen den beiden Ansichten herstellt.

Die erfindungsgemäße Funktionsweise des Verfahrens beruht auf dem Effekt, dass sich kontinuierliche und bandbegrenzte Signale im Originalbereich zu bandbegrenzten Impulsspektren im Bildbereich abbilden. Im vorliegenden Fall ist der Bildbereich als reellwertiges Spektrum durch die Impulsfolge bereits gegeben und besitzt die Phasenlage null, also $arg(DOP(t)) = 0$.

Durch das erfindungsgemäße Verfahren wird somit ermöglicht, dass wesentliche Parameter, wie zum Beispiel eine charakteristische Peak-Breite oder ein Signal-Rausch-Verhältnis bzw. Rauschverhalten durch den globalen Ansatz aus dem kontinuierlichen Signal $dop(\tau)$, also im frequenztransformierten τ-Raum, abgelesen werden können. Eine individuelle Bewertung dieser Parameter für jeden einzelnen Peak bei der Segmentierung ist damit überflüssig. Ein gleitendes Fenster, wie bei einigen gängigen Verfahren, ist also nicht notwendig, da die wahrscheinlichen Positionen der Peaks bzw. Doppel-Peaks das Ergebnis der Segmentierung sind.

Gemäß einer Ausführungsform umfasst das Segmentieren weiter ein Erzeugen eines Einseitenbandspektrums aus der Zeitreihe durch eine entsprechende Ergänzung mit Nullen, so dass notwendige mathematischen Eigenschaften eingehalten werden. Das Transformieren der modifizierten Zeitreihe in einen Frequenz-transformierten Raum erfolgt dabei durch Transformieren des Einseitenbandspektrums der Zeitreihe.

Insbesondere wird die Zeitreihe der Länge N als Einseitenbandspektrum interpretiert. Um mit der diskreten Fourier Transformation weiter zu rechnen, muss die Zeitreihe um N Nullen ergänzt werden, so dass das Einseitenbandspektrum eines analytischen Signals entsteht. Das analytische Signal im Original-Bereich erhält man durch Fourier-Transformation der modifizierten Zeitreihe.

Gemäß einer Ausführungsform umfasst das Segmentieren weiter ein Berechnen der Signalbandbreite im $dop(\tau)$-Signal. Davon hängen insbesondere das Signal-Rauschverhältnis und die charakteristische Peak-Breite ab.

Hierdurch wird es insbesondere vorteilhaft ermöglicht, den Originalbereich $dop(\tau)$ zu gewinnen und mit einem Tiefpass $\mathcal{F}(TP(\tau) \cdot dop(\tau)) \rightarrow DOP^*(t)$ zu fenstern. Es entsteht das gefilterte (Zeitreihen-) Signal $DOP^*(t)$.

Gemäß einer Ausführungsform umfasst das Rücktransformieren des Frequenztransformierten Raums in den Zeitbereich das Verwerfen des Imaginärteils des $dop(\tau)$-Signals.

Hierdurch wird es insbesondere gut ermöglicht, die durch die Filterung verstimmte Phase, $arg(DOP^*(t))$, zu rekonstruieren.

Gemäß einer Ausführungsform umfasst das Bestimmen eines Peaks bzw. Doppel-Peaks ein Bestimmen der Wendepunkte des Phasenverlaufes $arg(DOP^*)$ und/oder das Auffinden von Nullstellen.

Erfindungsgemäß umfasst das Bestimmen eines Peaks bzw. Doppel-Peaks ein Bestimmen eines globalen Maximums und eines oder mehrerer lokaler Maxima in der Amplitudenbetragsfunktion, max $|DOP^*(t)|$.

Zusätzlich kann optional ein lokales Minimum bestimmt werden, dass sich insbesondere zwischen dem globalen Maximum und einem lokalen Maximum befindet.

Hierdurch lässt sich besonders sicher eine falsch-positive Bestimmung ausschließen.

Erfindungsgemäß umfasst das Bestimmen eines Peaks bzw. Doppel-Peaks ein Bestimmen eines normierten Abstands zwischen dem globalen Maximum und dem einen oder mehreren lokalen Maxima.

Gemäß einer Ausführungsform umfasst das Klassifizieren der Segmente der Zeitreihe weiter ein Normalisieren der Zeitreihensegmente.

Gemäß einer Ausführungsform umfasst das Klassifizieren der Segmente der Zeitreihe weiter ein Bestimmen einer Fehlerwahrscheinlichkeit, resultierend aus dem Signal-Rauschverhältnis des Merkmalsraumes.

Gemäß einer Ausführungsform umfasst das Klassifizieren der Segmente der Zeitreihe weiter ein Filtern und/oder Fenstern der originalen Zeitreihe.

Gemäß einer Ausführungsform umfasst das Verfahren weiter ein Bestimmen einer Partikelgröße basierend auf der Amplitude des bestimmten Peaks bzw. Doppel-Peaks.

Gemäß einer Ausführungsform umfasst das Verfahren weiter ein Bestimmen einer Partikelgeschwindigkeit basierend auf dem Abstand des bestimmten Peaks bzw. Doppel-Peaks.

Gemäß einer Ausführungsform umfasst das Klassifizieren der Segmente der Zeitreihe weiter ein Bewerten der detektierten Peaks mit der amplitudenabhängigen Fehlerwahrscheinlichkeit, um falsch-positive Impulse auszuschließen.

Die Eingangs genannte Aufgabe, wird auch gelöst durch eine Vorrichtung zur Erfassung eines Partikels, umfassend einen Prozessor und einen Speicher, in dem Instruktionen hinterlegt sind, die, wenn sie von dem Prozessor ausgeführt werden, ein Verfahren zur Erfassung eines Partikels gemäß einem der zuvor beschriebenen Ausführungsformen durchführen.

Insbesondere umfasst die Vorrichtung auch einen oder mehrere Sensoren, die ausgebildet sind, die Zeitreihe zu erfassen oder die Vorrichtung hat Zugriff auf einen solchen Sensor. Ebenso kann die Vorrichtung auch eine oder mehrere Mittel aufweisen, die ausgebildet sind, eine charakteristische Feldverteilung einer elektromagnetischen Strahlung zu erzeugen. Beispielsweise kann ein Laserstrahl an jeder Position eine unterschiedliche Kombination aus einer lokalen Intensität und einer lokalen Polarisationsrichtung aufweisen. Die Vorrichtung kann entsprechend eine Laserquelle zur Erzeugung des Laserstrahls aufweisen. Weiter insbesondere kann die Vorrichtung ein oder mehrere Merkmale der Vorrichtung wie in DE 10 2019 209 213 A1 beschrieben aufweisen oder mit diesen kommunizieren.

Die Mittel zur Erzeugung der lokalen Intensität und der lokalen Polarisationsrichtung können ausgebildet sein, einen Laserstrahl mit radialsymmetrischen Polarisationsrichtungen zu erzeugen.

Mit anderen Worten wird durch Ausführungsformen des vorliegenden Verfahrens und der vorliegenden Vorrichtung eine gegebene Zeitreihe in nicht gleichmäßig verteilte Abschnitte zerlegt sowie Positionen und Amplituden von Puls- und insbesondere Doppelpuls- bzw. Doppel-Peak-Strukturen, welche in diesen Abschnitten enthalten sind, ermittelt. Jede von diesen Strukturen lässt sich dabei einem einzigen Partikel zuordnen und kann so als Objekt innerhalb der Zeitreihe aufgefasst werden.

Durch Ausführungsformen des vorliegenden Verfahrens und der vorliegenden Vorrichtung ist es möglich, sicher das Vorliegen bzw. Auftreten eines Partikels zu bestimmen. Insbesondere wird eine falsch-positive Bestimmung durch die vorliegenden Verfahren und Vorrichtungen ausgeschlossen bzw. stark reduziert.

Durch Ausführungsformen des vorliegenden Verfahrens und der vorliegenden Vorrichtung ist es möglich, ohne empirisches Kalibrieren des Algorithmus die zufällig verteilten Impulse zu Segmentieren. Notwendige charakteristische Merkmale werden adaptiv aus den Daten im τ-Raum bestimmt.

Ausführungsformen eines Verfahrens und einer Vorrichtung zur Erfassung eines Partikels werden nun im Zusammenhang mit den folgenden Figuren im Detail beschrieben. Es zeigen:

Fig. 1     eine schematische Ansicht einer Vorrichtung zur Erfassung eines Partikels;

Fig. 2     ein schematisches Ablaufdiagramm eines Verfahrens zur Erfassung eines Partikels;

Fig. 3     einen idealisierten Doppelpuls;

Fig. 4     eine beispielhafte Partikelerfassung;

Fig. 5     einen zeitlichen Verlauf eines Polarisationsgrads DOP(t);

Fig. 6     den Verlauf eines Fourier-transformierten Polarisationsgrads dop(τ) mit einer Hüllkurve;

Fig. 7     den Verlauf eines Rauschverhaltens des Verlaufs aus Fig. 4;

Fig. 8     den Verlauf einer Phasenlage zu zwei beispielhaften Doppelpulsen;

Fig. 9     einen Teilschritt einer Klassifizierung einer Erfassung eines Partikels;

Fig. 10     einen Teilschritt einer Klassifizierung einer Erfassung eines Partikels;

Fig. 11     einen Überblick der erfassten und verworfenen Erfassungen.

In den Figuren bezeichnen gleiche Bezugszeichen gleiche oder ähnliche Merkmale.

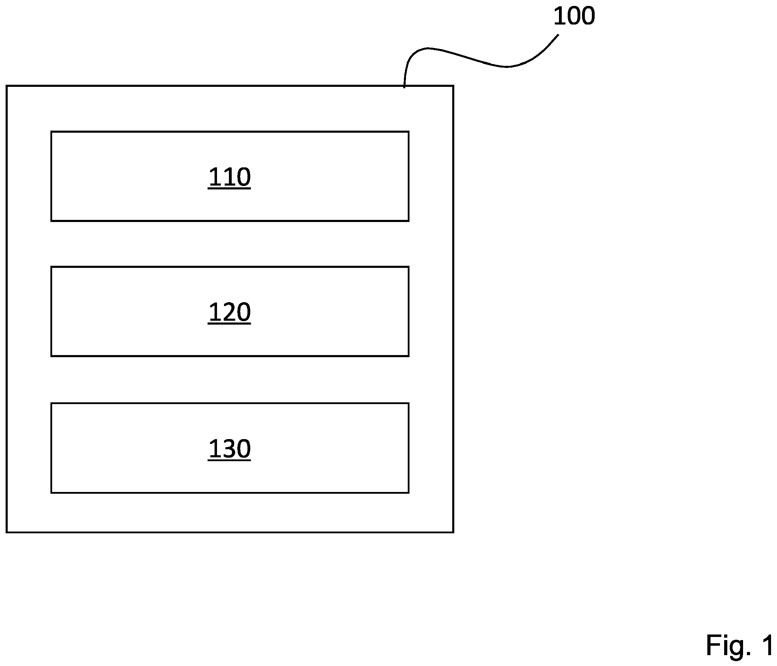

Fig. 1 zeigt eine schematische Ansicht einer Vorrichtung 100 zur Erfassung eines Partikels. Die Vorrichtung 100 umfasst dabei einen Detektor 110, einen Prozessor 120 und einen Speicher 130. In dem Speicher 130 sind dabei Instruktionen hinterlegt, die, wenn sie von dem Prozessor 120 ausgeführt werden, ein Verfahren zur Erfassung eines Partikels, wie es insbesondere im Zusammenhang mit den folgenden Figuren beschrieben wird, durchführen.

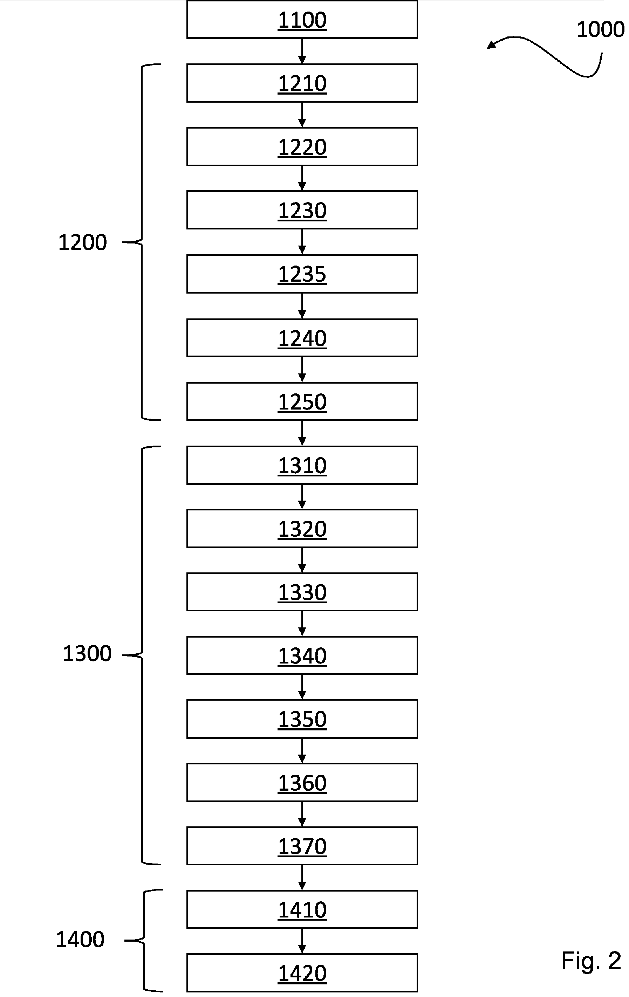

Fig. 2 zeigt ein schematisches Ablaufdiagramm eines Verfahrens 1000 zur Erfassung eines Partikels.

Das Verfahren 1000 beginnt in einem ersten Schritt 1100, in dem eine Zeitreihe eines Auftretens von einzelnen Partikeln erfasst wird.

Das Verfahren fährt mit dem Schritt 1200 fort, in dem die Zeitreihe segmentiert wird.

Der Schritt 1200 des Segmentierens lässt sich dabei in die folgenden Teilschritte zerlegen:

Zunächst wird in einem Schritt 1210 ein Einseitenbandspektrums der Zeitreihe erzeugt. Insbesondere werden in diesem Schritt 1210 N Nullen angefügt, damit die Eigenschaften eines Einseitenbandspektrums $DOP^*[i]$

$$i > \frac{N}{2}$$

= 0, für $\quad$ erfüllt sind.

Dann wird in einem Schritt 1220 das Einseitenbandspektrum der Zeitreihe in einen transformierten, insbesondere Frequenz-transformierten Raum transformiert.

Es folgt ein Schritt 1230 in dem der transformierte Raum tiefpassgefiltert wird. Insbesondere wird in diesem Schritt eine Faltung mit dem Filterkern durchgeführt, wobei das gleitende Mittel prominent ist. Alternativ kann in diesem Schritt 1230 auch eine Maskierung bzw. Wichtung im Frequenzbereich durchgeführt werden, was zu einem äquivalenten Ergebnis führt.

In einem folgenden Schritt 1235 wird die notwendige Grenzfrequenz (Cut-Off-Frequenz) aus der im Frequenzraum (τ-Raum) bestimmten Bandbreite abgeleitet bzw. abgeschätzt.

Dann wird in einem Schritt 1240 der Imaginärteil des tiefpassgefilterten transformierten Raums verworfen und nur der Realteil beibehalten.

Es folgt ein Schritt 1250 in dem der Realteil des tiefpassgefilterten transformierten Raums in den Zeitbereich rücktransformiert wird. Hieraus ergibt sich nun die verstimmte Phase, an deren Nullstellen bzw. Wendepunkten Peaks zu finden sind.

Das Verfahren fährt mit dem Schritt 1300 fort, in dem die aus dem Segmentieren gewonnenen Positionen als Segmente der Zeitreihe extrahiert und klassifiziert werden und so ein oder mehrere Doppel-Peaks identifiziert werden können.

Der Schritt 1300 des Klassifizierens lässt sich dabei in die folgenden Teilschritte zerlegen:

> In einem optionalen Schritt 1310 wird die originale Zeitreihe gefiltert. Dabei kann insbesondere nur ein Teil, beispielsweise jeder achte Datenpunkt der originalen Zeitreihe genutzt werden, wodurch eine Datenreduktion erreicht wird.
> In einem weiteren Schritt 1320 wird die originale Zeitreihe, entsprechend der berechneten Zeitpunkte gefenstert.

In einem folgenden Schritt 1330 werden die Zeitreihensegmente normalisiert.

In einem weiteren Schritt 1340 wird ein globales Maximum und ein oder mehrere lokale Maxima innerhalb des betrachteten Zeitreihensegments bestimmt.

In einem folgenden Schritt 1350 wird ein normierter Abstand zwischen dem globalen Maximum und dem einen oder mehreren lokalen Maxima in einem Segment der originalen Zeitreihe bestimmt.

In einem weiteren Schritt 1360 wird eine Fehlerwahrscheinlichkeit der signifikanten Amplitude in der originalen Zeitreihe bestimmt.

Abschließend wird im Schritt 1370 ein Doppel-Peak in der ursprünglich erfassten Zeitreihe bestimmt und zwar basierend auf den Ergebnissen aus den Schritten 1200 der Segmentierung bzw. basierend auf den Positionen der Nullstellen bzw. Wendepunkte.

Optional kann sich ein Schritt 1400 anschließen, in dem der segmentierte und klassifizierte Doppel-Peak ausgewertet wird.

Darin kann in einem Schritt 1410 eine Partikelgröße basierend auf der Amplitude des bestimmten Doppel-Peaks und/oder in einem Schritt 1420 eine Partikelgeschwindigkeit basierend auf dem Abstand der Maxima des bestimmten Doppel-Peaks bestimmt werden.

Ebenso kann in einem Schritt 1430 eine Partikelform basierend auf dem zeitlichen Verlauf des bestimmten Doppel-Peaks bestimmt werden.

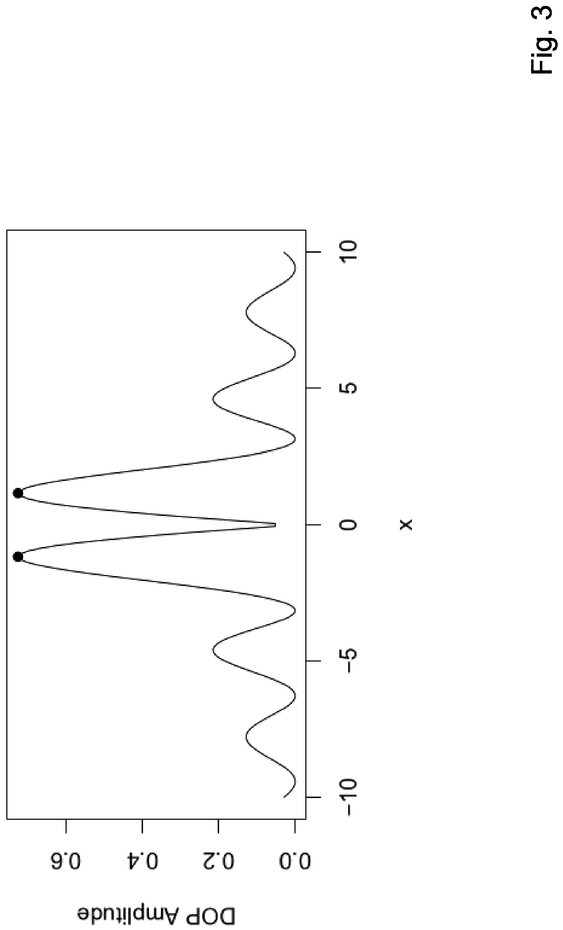

Das Verfahren 1000 umfasst somit die Schritte Erfassen 1100, Segmentieren 1200, Klassifizieren 1300 und Auswerten 1400, die nun im Zusammenhang mit den folgenden Figuren 3 bis 11 im Detail erläutert werden.

Fig. 3 zeigt einen idealisierten Doppelpuls bzw. eine idealisierte Doppelpuls-Struktur. Die Funktion entspricht dabei einer Struktur gemäß der Funktion

$$f(x) := \left| \frac{\sin^2 x}{x} \right|.$$

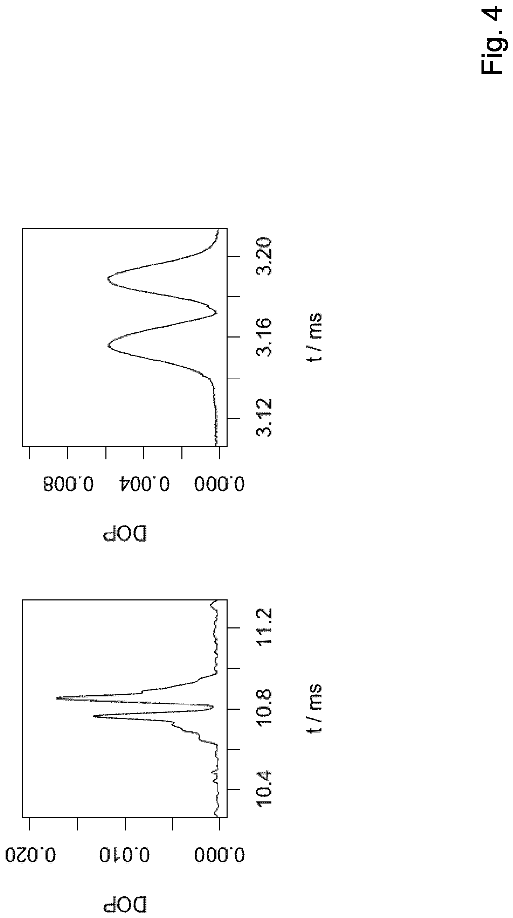

Dabei sind die Spitzen- oder Maximalwerte, die auch als Peak bezeichnet werden können, mit einem Punkt hervorgehoben. Das Nachschwingen links und rechts von den Doppelpulsen bzw. Doppel-Peaks ist eine Eigenart der Funktion. In realen Daten, wie sie in der folgenden Fig. 4, insbesondere der linken Seite gezeigt sind, sind diese Nebenmaxima üblicherweise vernachlässigbar klein, jedoch können in einigen Fällen solche Signalformen in den gemessenen Zeitreihen beobachtet werden.

Fig. 4 zeigt einen Ausschnitt einer beispielhaften tatsächlichen Partikelerfassung im zeitlichen Verlauf, wie sie von dem Detektor erfasst wird. Dabei ist der Polarisationsgrad, DOP, engl. degree of polarization, auf der Hochachse aufgetragen und der zeitliche Verlauf in Millisekunden auf der Rechtsachse, also eine Zeitreihe des Polarisationsgrads $DOP(t)$. Der linke Verlauf zeigt dabei eine Partikelmessung einer tatsächlichen Partikelschüttung, auf den in den folgenden Figuren wiederholt Bezug genommen wird und der den tatsächlichen Doppelpuls bzw. Doppel-Peak zeigt, der durch die vorliegenden Verfahren und Vorrichtungen erfasst bzw. korrekt als solcher identifiziert werden soll.

Der rechte Verlauf stammt beispielhaft von einer sogenannten Normpartikelscheibe, die standardisierte Partikel bekannter Form und Größe enthält. Durch eine Rotation der Normpartikelscheibe entsteht eine wiederkehrende Daten- bzw. Signalstruktur (korrelierte Daten), die nicht mehr der Annahme eines Zufallsprozesses für das Auftreten der Partikel genügt. Es handelt sich hierbei um einen periodischen und korrelierten Prozess.

Eine aufgezeichnete Zeitreihe, welche Doppel-Peaks enthält, ist nicht mittelwertfrei. Je mehr Impulse der Datensatz aufweist, desto mehr verschiebt sich der Mittelwert und die Streuung des Signals. Zudem kann jeder Impuls in Amplitude und Impulsbreite verschieden realisiert sein. Diese Eigenschaft und die Tatsache, dass sich die gesuchte Struktur aus zwei lokalen Maxima zusammensetzt, machen die meisten etablierten Verfahren unbrauchbar. Methoden zur Erkennung von EKG Signalen sind beispielsweise optimiert auf Signale eines kontinuierlichen Prozesses mit einem Hauptimpuls, der periodisch wiederkehrt. Dies funktioniert vorliegend jedoch nicht, da der Charakter von zufällig auftretenden Impulsen anders ist. Die jeweiligen Verteilungsfunktionen des beobachteten Prozesses für die Partikelgröße und -geschwindigkeit werden als konstant angenommen und ändern sich demnach im betrachteten Zeitfenster bzw. Datensatz nicht.

Ausgehend davon ergibt sich die folgende Zielstellung, die durch die vorliegenden Verfahren und Vorrichtungen erfüllt bzw. gelöst wird:

In einer eindimensionalen Zeitreihe tauchen Doppel-Peaks zufällig auf, so dass Impulse als Realisierung eines Zufallsprozess charakterisiert werden müssen. Die Verteilungsparameter für die Größen- sowie die Geschwindigkeitsverteilung sind unbekannt und werden als invariant gegenüber dem zufälligen Ausschluss einzelner Datenpunkte betrachtet. Nicht detektierte Peaks ändern die Dichteverteilung also nicht.

Folgende Eigenschaften bzw. Vorteile weisen die Ausführungsformen des vorliegenden Verfahrens und der vorliegenden Vorrichtung auf:

Es wird eine sichere Identifikation signifikanter Doppel-Peaks ermöglicht und insbesondere falsch-positive Erfassungen ausgeschlossen und auch solche Doppel-Peaks ausgeschlossen, die zu dicht stehen, oder nicht korrekt geformt sind, was durch die, im Folgenden beschriebene Segmentierung und Klassifizierung ermöglicht wird.

Aus den detektierten Verläufen bzw. Werten der Doppel-Peaks sowie den adaptiv bestimmten Parametern, lassen sich unter anderem die folgenden Größen ableiten:

- Amplituden führen zu Partikelgrößen
- Zeitliche Abstände zwischen linkem und rechtem Peak verweisen auf die Geschwindigkeit
- Das globale Signal-Rausch-Verhältnis (SNR) ist ein Maß für die Partikeldichte / Anzahl, hier kann die erforderliche Mindestmenge an Partikeln abgeleitet werden oder das Signal-Rausch-Verhältnis kann zum Unterscheiden einer Leermessung herangezogen werden.
- Aus dem lokalen SNR lässt sich (adaptiv) eine amplitudenunabhängige Detektionswahrscheinlichkeit ableiten
- Aus der Bandbreite / charakteristische Peakbreite kann die Höchstmenge an Partikeln abgeleitet werden.

Aus der Amplitude der individuellen Peaks lässt sich eine Partikelgröße ableiten und aus dem Abstand zwischen den Hauptmaxima bzw. Doppel-Peaks lässt sich eine Geschwindigkeit ableiten.

Das globale SNR, der Maximalwert der Betragsfunktion im Merkmalsraum und die bestimmte Signalbandbreite ermöglichen eine Bewertung der Datenqualität, in der Art, dass die Fälle "zu viele (zu hohe Konzentration)" oder "zu wenige" Partikel (Leermessung) unterschieden werden können.

Darüber hinaus sind bestimmte Tuningparameter aus den detektierten Verläufen herleitbar. Bei einem Tuningparameter existiert ein physikalischer oder signaltheoretischer Standardwert. Die vorliegenden Verfahren und Vorrichtungen funktionieren unter den definierten Randbedingungen der zufällig auftretenden Impulse, ohne dass man diesen Parameter einstellen muss. Ändern sich diese Randbedingungen, beispielsweise in korrelierte Signale, kann dieser Parameter justiert werden, um bessere Ergebnisse zu erreichen. Im Gegensatz dazu werden notwendige Einstellparameter bei gängigen Verfahren aus dem Stand der Technik empirisch durch ein Experiment oder eine Kalibrierkampagne bestimmt. Nach der Erfindung werden solche Einstellparameter nicht benötigt und die Tuningparameter werden adaptiv aus den Daten bestimmt. Ebenso ergibt sich durch die vorliegenden Verfahren und Vorrichtungen eine automatische Kalibrierfähigkeit, wodurch Einstellmöglichkeiten gegenüber dem Stand der Technik verringert werden können. Insbesondere ist eine Grundparametrierung bzw. Standardeinstellung aus informationstechnischer Sicht herleitbar, sodass keine Einstellungen mehr notwendig sind.

Im Gegensatz zu falsch-positiven Erfassungen, die insbesondere durch die vorliegenden Verfahren und Vorrichtungen vermieden werden, können durch die vorliegenden Verfahren und Vorrichtungen insbesondere falsch-negative Daten toleriert. Darüber hinaus ist basierend auf den vorliegenden Verfahren und Vorrichtungen eine Verallgemeinerung auf mehrdimensionale reellwertige ( $\mathbb{R}^n$ )-Daten möglich.

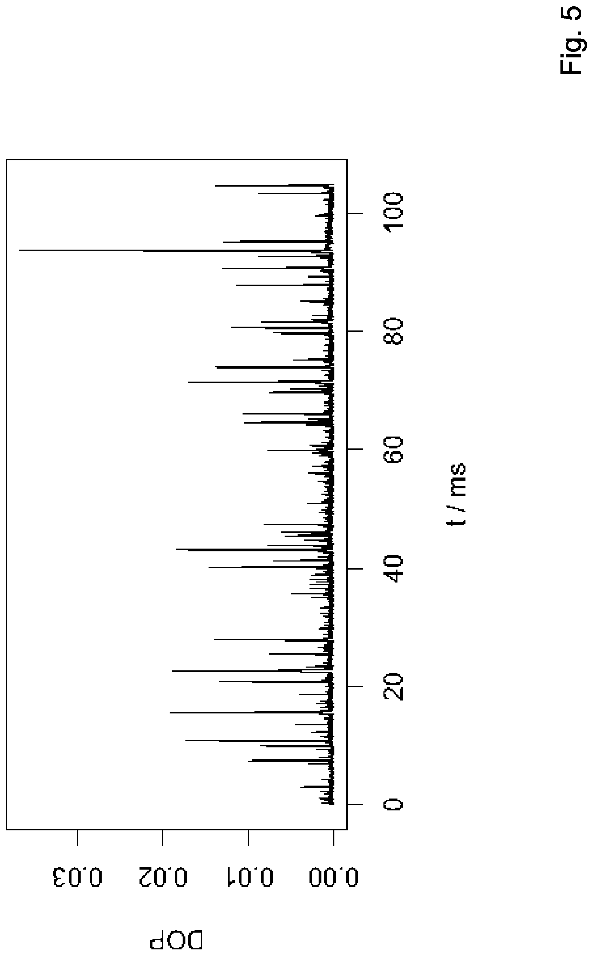

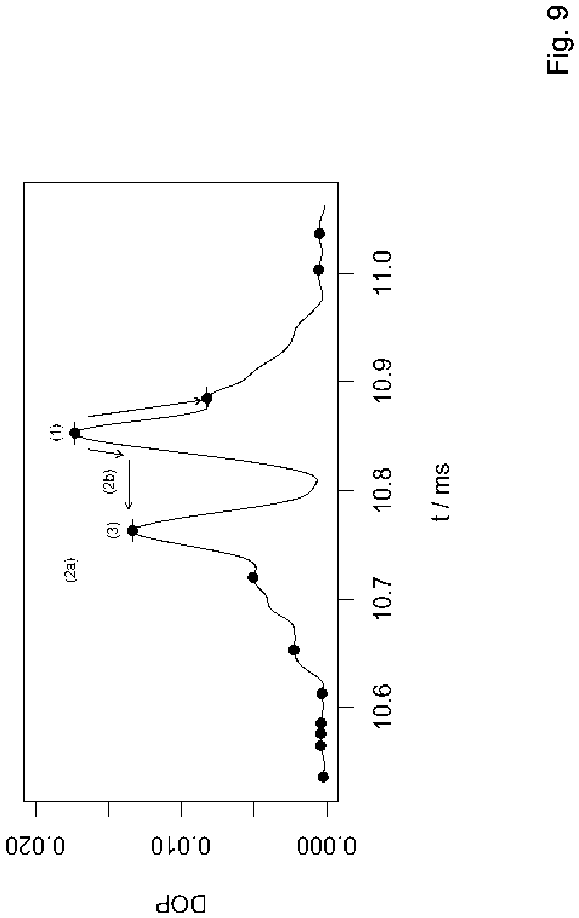

Diese Eigenschaften und Vorteile werden insbesondere erreicht durch die im folgenden beschriebenen Teilschritte des Segmentierens und des Klassifizierens der erfassten Daten bzw. Zeitreihen. Dabei beschreiben insbesondere die Fig. 5 bis 8 Teilschritte der Segmentierung und die Fig. 9 bis 11 die Teilschritte der Klassifizierung der Doppel-Peaks.

Die Segmentierung hat insbesondere die Aufgabe, eine Liste mit den wahrscheinlichsten Positionen der Partikel in der Zeitreihe zu bestimmen, d. h. solche Abschnitte in der Zeitreihe zu identifizieren, die einen Doppel-Peak aufweisen. Vorliegend wird insbesondere ein sog. spektraler Ansatz zu Grunde gelegt, wobei ein analytisches Signal, welches mit der Hilbert-Transformation in Verbindung steht, sowie die Fourier-Transformation, die zwischen einem Bildbereich und einem Originalbereich übersetzt.

Fig. 5 zeigt eine beispielhaft erfasste Zeitreihe eines Polarisationsgrads *DOP(t)*, wobei erneut, wie in Fig. 4, der Polarisationsgrad auf der Hochachse und der zeitliche Verlauf in Millisekunden auf der Rechtsachse aufgetragen ist.

Diese Zeitreihe umfasst eine Menge von stets positiven Einzelimpulsen ähnlicher Breite. In Abhängigkeit der Auftretenswahrscheinlichkeit verschieben sie die Momente erster und zweiter Ordnung der zugrundeliegenden Verteilungsfunktion, so dass bei einer steigenden Anzahl von Einzelereignissen sowohl aus dem Mittelwert als auch der Streuung keine sinnvolle Aussage mehr über das Rauschverhalten, SNR, engl. signal-to-noise ratio, oder Konfidenzintervalle (innerhalb der Zeitreihe) gewonnen werden kann. Wenn mit zunehmender Impulsdichte die Streuung ansteigt, sinkt aber die Detektionswahrscheinlichkeit von Impulsen mit kleiner Amplitude, wenn einfache Schwellwerte im Zeitbereich zur Anwendung kommen. Der Zeitpunkt des Auftretens sowie die Amplitudenverteilung der Impulse sind Zufallsprozesse, deren Eigenschaften sich bei geeigneter Transformation, wie vorliegend erläutert, nutzen lassen.

Das DOP-Signal, *DOP(t)*, in Fig. 5 zeigt den zeitlichen Verlauf der Signalamplitude

$$DOP(t) = \sqrt{S_1(t)^2 + S_2(t)^2}$$

einer kompletten Messreihe mit $N = 2^{16}$ Datenpunkten. Der Polarisationsgrad setzt sich dabei aus den Stokes-Parametern $S_1(t)$ und $S_2(t)$ zusammen, welches typische Kenngrößen von polarisiertem Licht sind, wie es hier von dem Detektor erfasst wird. Dabei besteht jeder Impuls aus einem zentralen Minimum und zwei Maxima, welche sich rechts und links davon positionieren, wie in Fig. 4 gezeigt.

Die folgenden grundlegenden Hypothesen führen schließlich zum vorliegenden spektralen Ansatz mittels analytischem Signal:

> 1. *DOP(t)* entspricht dem Amplitudenbetrag eines Bildbereiches/Frequenzbereiches
>
> 2. $DOP(t) \in \mathbb{R}$ ist reellwertig
>
> 3. es existiert ein Originalbereich $dop(\tau)$, der alle Anforderungen erfüllt, so dass *DOP(t)* existiert

Es wird sodann das Einseitenbandspektrum *DOP\*(t)* der Zeitreihe *DOP(t)*, durch eine adäquate Erweiterung, erzeugt. Dieser Schritt entspricht dem oben im Zusammenhang mit Fig. 2 beschriebenen Schritt 1210. Die Funktion *DOP\*(t)* entspricht dem Einseitenbandspektrum eines analytischen Signals $dop(\tau)$, so dass die inverse Fouriertransformation

$$dop(\tau) = \frac{1}{\sqrt{2T}} \mathcal{F}^{-1}(DOP^*(t))$$

gilt und dient als Hilfsmittel, um den Originalbereich *dop*($\tau$) zu gewinnen. Umgekehrt führt die Fourier-Transformation $\mathcal{F}(dop(\tau))$ wieder zu *DOP\*(t)* und stellt so die Verknüpfung zwischen beiden Funktionen her.

Demnach entspricht ein Doppel-Peak (DP) im Bildbereich einem kontinuierlichen bandbegrenztem Signal $f(\tau)$ im Originalbereich,

$$DOP(t_{DP}) \overset{\mathcal{F}}{\leftrightarrow} dop(\tau, t_{DP})$$, mit der Phasenlage $arg(dopDP(\tau)) = 0$. Die Summe aller Doppel-Peaks führt im Original-bereich so zu einem großen Gemenge mit konstruktiver und destruktiver Überlagerung.

Das Einseitenbandspektrum ist bandbegrenzt, so dass in der oberen Hälfte, aber zumindest für $t > T$, alle Werte verschwinden, $DOP^*(t)|_{t>T} \to 0$ müssen.

Aus dieser Forderung folgt, dass

$$DOP^*(t) = \begin{cases} DOP(t) & 0 \leq t < T \\ 0 & T \leq t < 2 \cdot T \\ 0 & t < 0, \end{cases}$$

wobei *DOP\*(t)*eine erweiterte Funktion bis $t = 2 \cdot T$ darstellt. Sie enthält die Messreihe *DOP(t)* und wird bis $2 \cdot T$ ergänzt. Das erzeugt ein bandbegrenztes Spektrum und führt zu einer eineindeutigen Abbildung, wenn die diskrete Fourier-Transformation (DFT) zur Anwendung kommt. Das ist ausreichend, da die DFT symmetrisch bezüglich $N/2$ ist und keine negativen Indizes kennt.

Weiterhin wird so garantiert, dass

$$\int_{-\infty}^{\infty} dop(\tau)\mathrm{d}\tau = 0$$

absolut integrierbar wird.

Bandbegrenzung und absolute Integrierbarkeit sind wesentliche Eigenschaften, welche im Allgemeinen Signale aufweisen müssen, damit orthogonal Mode Zerlegungen, wie zum Beispiel FT oder DFT, ordnungsgemäß funktionieren. Die Konstruktion dieser Eigenschaften, wie im vorliegenden Fall, sorgt dafür, dass typische Korrekturverfahren, wie eine Fensterung oder Ähnliches nicht durchgeführt werden müssen.

Aus der Eigenschaft $DOP(t) \in \mathbb{R}^+$ folgt für die Phase $arg(DOP(t)) = 0$ und damit auch $arg(DOP^*(t)) = 0$ eine hinreichende Aussage. Sie bedeutet, dass durch eine Filterung oder Manipulation von *DOP(t)* lokal die Phase abweichen kann.

Die mittlere Phasenlage

$$\frac{1}{T} \int_0^T \mathrm{arg}(DOP(t))\,\mathrm{d}t = 0$$

muss aber notwendigerweise Null sein. Für *DOP\*(t)* gilt selbiges entsprechend.

Wird das Signal durch eine Tiefpassfilterung im Originalbereich verstimmt, so entstehen lokal an den Stellen der Peaks Abweichungen, $arg(DOP(tn)) \neq 0$, mit einem Wendepunkt (notwendig) oder einem Nulldurchgang (hinreichend). Diese lokalen Eigenschaften lassen sich auf einfache Weise über Vorzeichenwechsel detektieren aus denen die Positionen der Partikel folgt.

Der Originalbereich stellt im mathematischen Sinne eine analytische und komplexwertige Funktion dar, $dop(\tau) \in \mathbb{C}$. Dabei ergibt sich der Imaginärteil $op_{Im} = \mathrm{Im}(dop(\tau))$ aus der Hilbert-Transformierten, wie folgt

$$dop(\tau) = dop_{\Re}(\tau) + \mathbf{j}\mathcal{H}(dop_{\Re}(\tau)).$$

Die Hüllkurve

$$ev(\tau) = \sqrt{dop_{\Re}(\tau)^2 + dop_{\Im}(\tau)^2},$$

welche man zur Abschätzung der Signalbandbreite nutzen kann, wird direkt aus dem analytischen Signal gewonnen.

Dabei ist zu erkennen, dass die Skalierung der FT an dieser Stelle mit $\sqrt{2N}$ stattfindet. Dies liegt an der Erweiterung mit '0' was auch Zero-Padding genannt wird. Die gewählte Skalierung sorgt dafür, dass die FT energieerhaltend bleibt, so dass das Parsevallsche Theorem $\int |x(t)|^2 dt = \int |X(\omega)|^2 d\omega$ gültig bleibt.

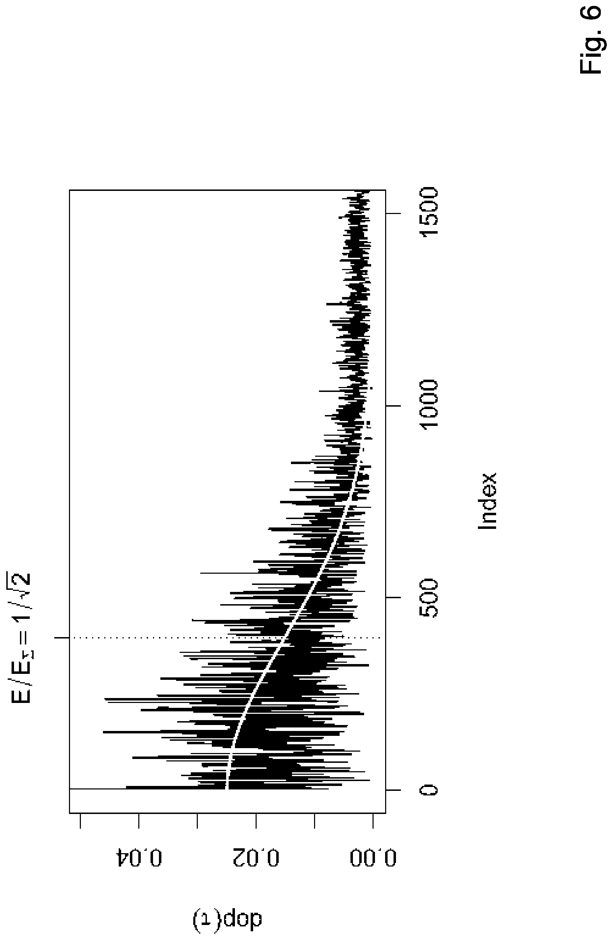

Fig. 6 zeigt den Verlauf eines Fourier-transformierten Polarisationsgrads $dop(\tau)$ mit einer Hüllkurve. Dabei ist auf der Hochachse der Polarisationsgrads $dop(\tau)$ und auf der Rechtsachse eine Laufzahl bzw. der Index aufgetragen. Bei dem Signal $dop(\tau)$ handelt es sich um den Originalbereich des erweiterten DOP-Signals $DOP^*(t),$ wie zuvor erläutert.

Wie in Fig. 6 ersichtlich wird die Hüllkurve $ev(\tau)$ = $|dop(\tau)|^2$ am Begin des Datensatzes bis zu einem Index von $n \leq 1500$ angezeigt, wobei der komplette Datensatz insgesamt $N = 2^{16}$ Stützstellen besitzt.

Dabei ist zu erkennen, dass die Amplitude in einem kurzen Bereich bis auf fast Null abfällt. Die weiße Linie deutet nur visuell an, dass die Signalenergie (Hüllkurve) ähnlich einer exponentiellen Dichteverteilung $0.025 \cdot e^{-x^2/(2bw^2)}$ abfällt. Hier beschreibt $bw$ die Bandbreite, welche sich aus dem Diagramm ablesen lässt.

Dieses besondere Verhalten entsteht durch die Forderung $arg(DOP^*(t)) = 0$ im Bildbereich und durch die (Band-) Breite sowie Impulsform. Letztere entspricht in grober Näherung einer Glockenkurve $\sim e^{-x^2}$, welche sich gemäß dem Skalierungssatz der FT im Originalbereich wieder in eine Glockenkurve mit skalierter Breite und Amplitude übersetzt, $\mathcal{F}\big(g(ax)\big) \to \frac{1}{|a|} G\left(\frac{1}{a}\omega\right)$.

Wie im Folgenden erläutert wird, kann so die Bandbreite mit der mittleren Peak-Breite in Beziehung gesetzt werden.

Im Originalbereich starten so alle Signalanteile (je Doppel-Peak) mit der gleichen Phasenlage und überlagern sich zu Begin konstruktiv. Dies führt am Anfang der Datenreihe zu einem $\sim e^{-x^2}$-artigen Verlauf, wie in Fig. 6 ersichtlich. Die mittlere Amplitude fällt mit steigendem Index monoton ab, da die Signale mit steigendem Index aus der Phase laufen und sich damit zunehmend destruktiv überlagern.

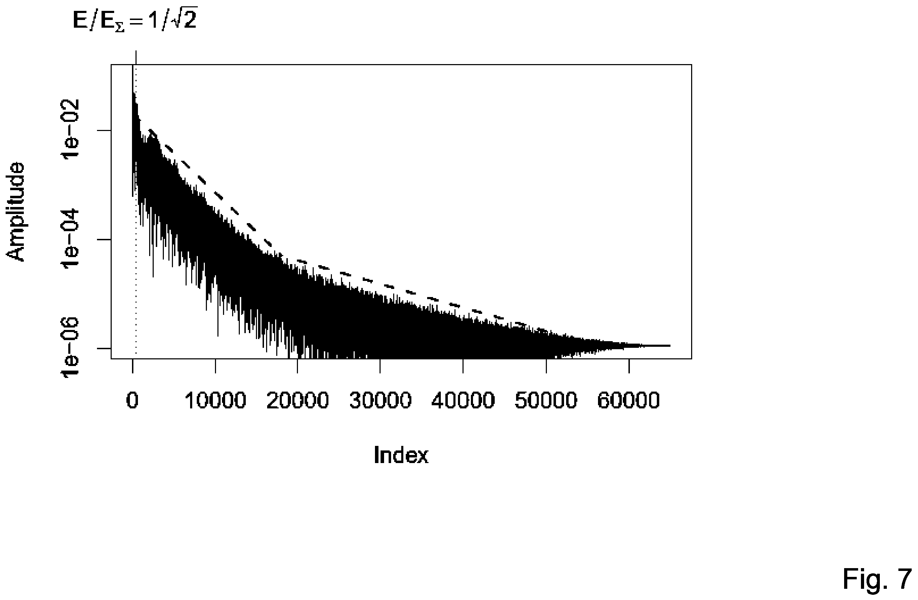

Fig. 7 zeigt den Verlauf eines Rauschverhaltens des Verlaufs aus Fig. 6. Dabei ist logarithmisch auf der Hochachse die Amplitude und auf der Rechtsachse der Index aufgetragen. Hierdurch werden Rauschprozesse deutlich.

Die gestrichelten Linien verdeutlichen, dass es mindestens zwei stochastische Prozesse gibt: (linke Linie) $ev(\tau) \sim e^{-x/3000}$ und (rechte Linie) $v(\tau) \sim e^{-x/10000}$. Diese beiden Prozesse könnten mit einem typischen 1/f Rauschen zusammenhängen. Dabei kann das Rauschen typisch für die Elektronik sein und eine Änderung des Rauschverhaltens kann Aufschluss über den Systemzustand geben, wie beispielsweise eine Alterung.

In Fig. 6 zeigt die vertikale Linie den Index, an dem ca. 70% der Signalenergie erreicht sind. Dieser Punkt wird hier als (Signal-) Bandbreite

$$bw := \frac{\int_0^{bw} ev(\tau)^2 d\tau}{\int_0^{\infty} ev(\tau)^2 d\tau} = \frac{1}{\sqrt{2}}$$

bezeichnet und berechnet sich aus dem Verhältnis der gleitenden Summe (Integral) der Energie $E$, bezogen auf die Gesamtenergie $E_{\Sigma}$. Für das Datenbeispiel oben, ergibt sich $bw = 397$.

Durch den Skalierungssatz der FT, $\mathcal{F}\big(g(ax)\big) \to \frac{1}{|a|} G\left(\frac{1}{a}\omega\right)$, lässt sich aus der Bandbreite $bw$ die Breite eines Doppel-Peaks im Bildbereich mit $\Delta P \approx 1/(bw)$ abschätzen. In der Implementierung muss die Anzahl der Samples multipliziert werden, da die DFT keine normierten Frequenzen ($0 < \omega < 2\pi$), sondern nach Indizes aufgeteilt ist. Ebenso setzt dieser Ansatz voraus, dass alle Doppel-Peaks in etwa gleich breit sind. Das sollte der Fall sein, denn die gemessenen Partikel weisen alle ähnliche Geschwindigkeiten im Messzeitfenster ($T = \mathcal{O}(100 \text{ ms})$) auf. Die geschätzte Peakbreite für das Arbeitsbeispiel beträgt $dP = 165.08$ und wird für die Segmentierung und Klassifizierung herangezogen.

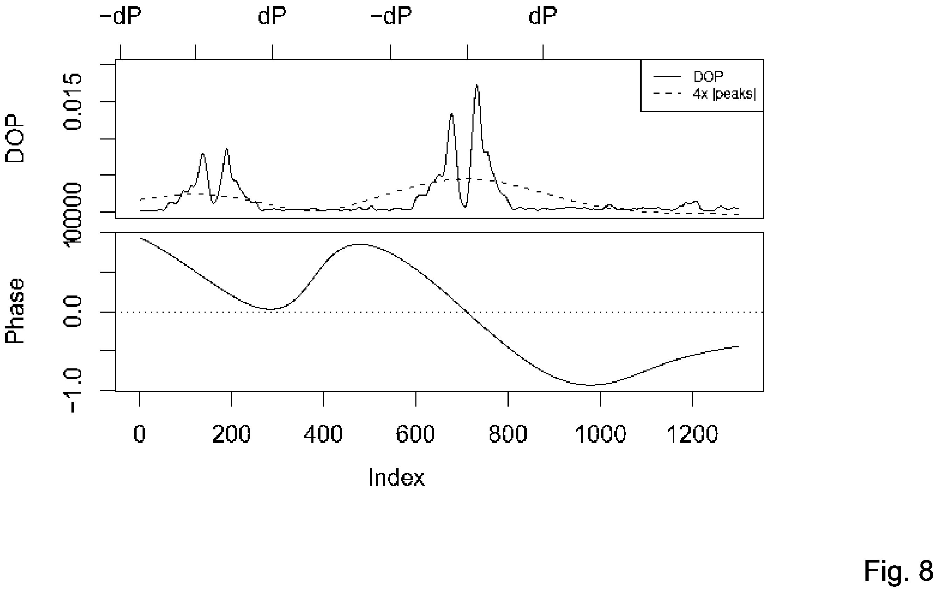

Der nächste Schritt besteht aus einer Tiefpassfilterung und einer Rekonstruktion in den Bildbereich, um die mittlere Phase des $DOP^*(t)$-Signals zu erhalten, was im Zusammenhang mit der folgenden Fig. 8 beschrieben wird. Dies entspricht den oben beschriebenen Schritten 1220 und 1230. Die Bandbreite bw dient hier als Grenzfrequenz für eine Filterfunktion

$$filt(\tau) = \begin{cases} dop(\tau) \cdot BP(\tau, bw), & \tau < bw \\ \approx 0, & \text{sonst.} \end{cases}$$

die als Tiefpass wirkt. Dabei bezeichnet $BP(\tau, bw)$ eine allgemeine Bandpassfunktion, so dass $BP(\tau)|_{\tau>bw} = 0$ gilt. Für einen Gauß-artigen Tiefpass folgt $bw \approx 3\sigma$. Im vorliegenden Fall, der sich als brauchbar erwiesen hat, ist

$$BP(f, f_c, bw) = e^{-2.3025 \frac{(f-f_c)^2}{BW^2}}$$

definiert, wobei $f_c = 0$ als Mittenfrequenz gewählt werden kann und demnach entfällt.

Für die rücktransformierte Funktion

$$peaks(t) \in \mathbb{C}$$

$$peaks(t) = \mathcal{F}\left(\Re\big(dop(\tau)\big)\right)$$

ist der Realteil maßgebend, da der Imaginärteil des analytischen Signals "nur" eine Ergänzung darstellt, damit ein Einseitenbandspektrum entsteht. Daher wird der Imaginärteil verworfen und nur der relevante Realteil weiterverarbeitet. Das rekonstruiert die Phase. Dies entspricht den oben beschriebenen Schritten 1240 und 1250.

Dies ist im Zusammenhang mit Fig. 8 ersichtlich, die den Verlauf einer Phasenlage zu zwei beispielhaften Doppelpulsen zeigt. Dabei ist auf der Hochachse der Polarisationsgrad DOP bzw. die Phasenlage und auf der Rechtsachse der Index aufgetragen. *dP* bezeichnet dabei die Hälfte der Peak-Breite.

Wie in Fig. 8 ersichtlich sind für den großen Doppel-Peak rechts beide Bedingungen erfüllt. Der kleine Doppel-Peak links im Bild, weißt nur einen Wendepunkt auf.

Der Amplitudenverlauf |*peaks*(*t*)| entspricht der tiefpass-gefilterten Version des *DOP\**(*t*)-Signals. Er besitzt demnach im Bereich ein Maximum, das als Kriterium bei der Klassifizierung herangezogen werden wird. Die berechnete Bandbreite dient also als Grenzfrequenz und zur Berechnung der Peakbreite.

Aus der Information über die lokalen Maxima des Amplitudenverlaufes und die Wendepunkte der Phase, können nun die Mittelpunkte der Doppelpeaks bestimmt werden. Dabei sind Nullstellen der Phase gleichzeitig Wendepunkte.

Projiziert in den Bereich aus Fig. 8 ergeben sich vorliegend für den rechten Peak ein Index von 123 und für den linken Peak ein Index von 711.

Die vorher berechnete Bandgrenze bw schätzt nicht nur die maximale Breite eines Partikelimpulses *ΔP*, sondern auch den typischen erforderlichen Abstand zwischen Doppel-Peaks. Liegen diese zu weit zusammen existiert kein Wendepunkt/Nulldurchgang oder auch das Maximum der gefilterten *peaks*(*t*)-Funktion verschwindet oder verschiebt sich. Aufgrund dieses Verhaltens werden bei dichten Gruppen mögliche Doppel-Peaks ignoriert, was zu falsch negativen Punkten führt. Jedoch, werden auf diese Weise falsch-positive Zählungen minimiert.

Ausgehend von der zuvor beschriebenen Segmentierung, welche die prinzipiellen Positionen für mögliche Peaks liefert, müssen nun die Datenabschnitte vereinzelt werden und individuell auf Plausibilität geprüft werden. Im Ergebnis entstehen Ausschnitte *DOP(t)* mit $t_1 < t < t_2$, welche eine Breite von mindestens $t_2 - t_1 > ΔP$ aufweisen, was nun im Zusammenhang mit den Fig. 9 bis 11 durch die Teilaspekte der erfindungsgemäßen Klassifizierung beschrieben wird.

Es werden zunächst für jeden Ausschnitt folgende lokale Maßzahlen berechnet:

    1. Varianz $\sigma^2$ des Originalbereichs
    2. Spektrale Leistungsdichte (SLD), engl. power spectral density
    3. Fehlerwahrscheinlichkeit (FAP), engl. false alarm probability p

Die lokale Varianz

$$\mathrm{Var}_*\big(y(x)\big) = \sigma_*^2$$

$$= \frac{1}{N_*} \sum_{n=n_1}^{n_2} \big(\overline{y} - y(x_n)\big)^2$$

entspricht der quadrierten Streuung in einem Datensegment in dem ein Partikel oder auch Doppel-Peak vermutet wird. Der Datenbereich ist hier in diskreter Form als $n_1 ... n_2 \leftrightarrow t_1 ... t_2$ gegeben und korrespondiert mit den Zeitpunkten des kontinuierlichen Signals. Die Zahl der Datenpunkte ist mit $N_* = n_2 - n_1$ gegeben.

Die lokale Varianz des Originalbereichs wird durch eine Transformation des Bildbereiches *DOP\**(*t*) abgeleitet.

Dabei gilt wieder die Annahme, dass es sich um ein analytisches Signal handelt, gemäß der Definitionen oben.

Daraus folgt, dass

$$\mathrm{Var}_*\big(dop(\tau)\big) = \mathrm{Var}_*\left(\frac{1}{4}\Re(\mathcal{F}\big(DOP^*(t)\big)\right)$$

$$\xrightarrow{?} \mathrm{Var}_*\left(\frac{N}{2} DOP(t)\right)$$

$$= \sigma_{\mathrm{dop}}^2$$

zunächst aus der FT der DOP\*(t)-Daten entsteht.

Im Bildbereich, der einem Amplitudenspektrum gleich zusetzen ist, ergibt sich die standardisierte Leistungsdichte (SLD) aus

$$SLD(t) = \frac{N}{\sigma_{\mathrm{dop}}^2 (N - 1)} DOP(t)$$

und skaliert für Sinus-Signale zwischen $0 < SLD(t) \leq 1$. Die SLD stellt eine standardisierte Version des Amplitudenspektrums dar. Mit standardisierten SLDs lassen sich verschiedene Spektren mit unterschiedlichen Rauschverhalten vergleichen. Das ist der Fall, wenn der gleiche Prozess zu unterschiedlichen Zeitpunkten beobachtet wird und durch extrinsische Einflüsse die Messqualität ändert, aber nicht der eigentliche Prozess.

Aus der standardisierten SLD folgt für jeden Datenpunkt eine Fehlerwahrscheinlichkeit, oder engl.

false alarm probability (FAP). Diese Bewertung wirkt wie eine dynamische Auflösungsgrenze, da hier das lokale Rauschen (lokales SNR) des Originalbereichs maßgebend ist.

Die FAP gibt an mit welcher Wahrscheinlichkeit der betrachtete Punkt kein signifikanter Peak ist. Oder anders ausgedrückt, der betrachtete Datenpunkt besitzt mit einer Wahrscheinlichkeit $1 - p$ eine Amplitude von $SLD > SLD_0$. $SLD_0$ ist hier die Referenz oder Rauschschwelle für den betrachteten Datenabschnitt, die sich aus den transformierten Daten im Originalbereich ergibt. Die FAP entspricht dabei einer Art p-Wert, - bekannt aus der Statistik -

$$ p = 1 - \left(1 - P(SLD > SLD_0)\right)^M, $$

der für die Signifikanzbewertung eines Ergebnisses herangezogen wird. Die Wahrscheinlichkeit

$$ P(SLD > SLD_0) \approx (1 - SLD)^{(N-3)/2} $$

dass ein gewählter Datenpunkt der SLD sich signifikant vom Rauschen unterscheidet, berechnet sich aus der Spektralleistungsdichte und der Anzahl der Stützstellen $N$. Der Parameter $M = -6.362 + 1.193 \cdot N + 0.00098 \cdot N^2$ beschreibt hierbei die Anzahl der Freiheitsgrade, die mit ungleichmäßiger Abtastung bestimmt werden können.

Dabei stellt $M$ ein Maß für die Anzahl unabhängiger Frequenzen dar. Alternativ kann $M = N/2$ gesetzt werden.

Da die $SLD$ und der p-Wert für jeden Datenabschnitt separat berechnet werden, handelt es sich um eine dynamische (adaptive) Anpassung der Rauschschwelle.

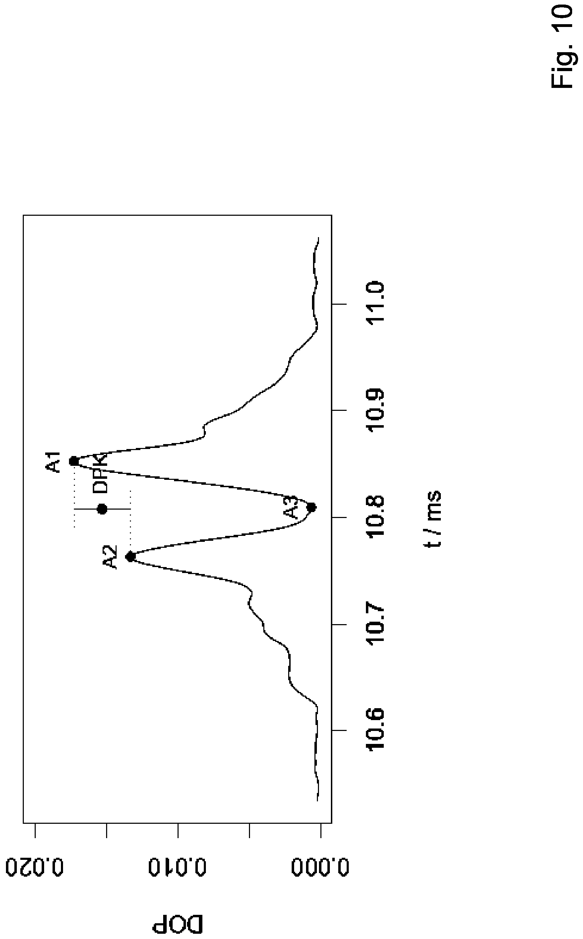

Im Folgenden wird nun das Detektieren bzw. Auffinden eines Doppel-Peaks im Zusammenhang mit den Fig. 9 und 10 im Detail erläutert.

Fig. 9 und 10 zeigen Teilschritte einer Klassifizierung. Dabei ist auf der Hochachse der Polarisationsgrad DOP und auf der Rechtsachse die Zeit in Millisekunden aufgetragen.

Das Detektieren der Doppel-Peaks setzt dabei die folgenden Bedingungen voraus, die in Fig. 10 gezeigt sind:

- es gibt im Datenausschnitt genau ein globales Maximum, was mit A1 bezeichnet ist;
- das nächstliegende (große) lokale Maximum, was mit A2 bezeichnet ist, ist die andere Spitze des Doppel-Peaks;
- dazwischen liegt das Minimum, was mit A3 bezeichnet ist;
- die betrachtete Funktion ist hinreichend glatt, es gibt nahezu kein Rauschen auf der Kurve; und
- beide Ordinaten sind normalisiert, um eine allgemeine Formulierung zu ermöglichen.

Die Schritte des Klassifizierens werden nun anhand der Fig. 9 im Detail erläutert:
Zunächst erfolgt ein Postprocessing, was einen Tiefpassfilter und/oder eine Fensterung der originalen Zeitreihe umfassen kann, wie oben in den Schritten 1310 und 1320 beschrieben, sowie ein Normalisieren der Ordinaten der Zeitreihensegmente und ein Berechnen aller lokalen Maxima, wie oben im Schritt 1330 beschrieben.

Sodann wird zunächst das globale Maximum am Punkt $\{\hat{t}_{max}, DOP(\hat{t}_{max})\}$ bestimmt, vgl. A1 in Fig. 10, was als Startpunkt dient, vgl. (1) in Fig. 9, was dem oben beschriebenen Schritt 1340 entspricht.

Dann wird links und rechts vom globalen Maximum "heruntergelaufen", d. h. dem Verlauf bis zu einem Wert $\Delta t$ gefolgt, wobei $t_l = t_{max} - \Delta t$ und $t_r = t_{max} + \Delta t$, wie durch die Pfeile links und rechts von (1) angezeigt.

Dabei wird berücksichtigt, dass alle lokalen Maxima $\hat{t}$ unterhalb der Linie (2a) liegen, $\forall \hat{t}_l : DOP(t_{min}) < DOP(\hat{t}) < DOP(\hat{t})$ und ein lokales Maximum links, (3) die Projektionslinie (2b), $\exists \hat{t} : DOP(\hat{t}) > DOP(t_l)$ trifft.

Dann wird das lokale Maximum (3) mit dem Ergebnis von der anderen Seite bewertet durch Auswahl der drei Zeitpunkte $\hat{t}_{max}, \hat{t}_l, \hat{t}_r$ und Berechnen der normierten Distanz zwischen globalem Maximum und zweiten Peak $\hat{d} = \sqrt{\hat{t}_{max}^2 - \hat{t}_{l,r}}$ . Dabei wird der Punkt mit der größten Distanz $\hat{d}_{max}$ verworfen, wodurch nur zwei Punkte übrig bleiben, (1) und (3), was dem oben beschriebenen Schritt 1350 entspricht.

Die normierte Distanz sorgt hier schon für eine Vorauswahl, in dem Sinne, dass bei einem Doppel-Peak beide Maxima $DOP(\hat{t}) \approx DOP(\hat{t}_{r,l})$ etwa gleich groß sein sollten. Die Normierung sorgt dafür, dass ein Amplitudenunterschied ähnlich gewichtet wird, wie der zeitliche Abstand.

Zusätzlich zu den zuvor beschriebenen Schritten kann das Signal beispielsweise noch maskiert werden und/oder einer Kurvenglättung unterzogen werden, wodurch falsche Zuordnungen bei hohem Rauschen oder Überschneidungen mit benachbarten Impulsen verhindert werden.

Das Ergebnis der Peak-Findung ist in Fig. 10 ersichtlich.

Dabei wird das lokale Minimum A3

$$ DOP_{min} = \min(DOP(\hat{t}_1 < t < \hat{t}_2) $$

zwischen den Peaks als Bewertungsparameter herangezogen. Der Punkt

$$ DPK : \left\{\bar{\hat{t}}, \overline{A}\right\} $$

beschreibt die mittlere Position zwischen den beiden Maxima.

Im aufgezeigten Beispiel hängt die mittlere DOP-Amplitude von der Abdeckung des Laserstrahls durch ein Partikel ab, was sich in einer proportionalen Intensitätsänderung und damit in einer DOP-Abhängigkeit äußert. Aus dem DOP-Wert kann mit Hilfe einer Kalibrierfunktion die Partikelgröße berechnet werden.

Für das in Fig. 10 gezeigte Beispiel ergeben sich die folgenden exemplarischen Werte:

|  | DOP | t/ms | FAP |
|---|---|---|---|
| A1 | 0,01727 | 10,85 | 0,00000 |
| A2 | 0,01331 | 10,76 | 0,00582 |
| A3 | 0,00065 | 10,81 | 1,00000 |
| DPK | 0,01529 | 10,81 | 0,00000 |

Das Ergebnis der Datenklassifizierung sind im Wesentlichen die drei Punkte, welche den Doppel-Peak (A1 und A2) und das Minimum (A3) der gesuchten Impulsform angeben.

Abschließend findet die Bewertung der klassifizierten Punkte statt. Ziel ist es die Schätzung der Klassifizierung zu überprüfen und so Punkte, welche die gewünschte Impulsform nicht einhalten, auszuschließen.

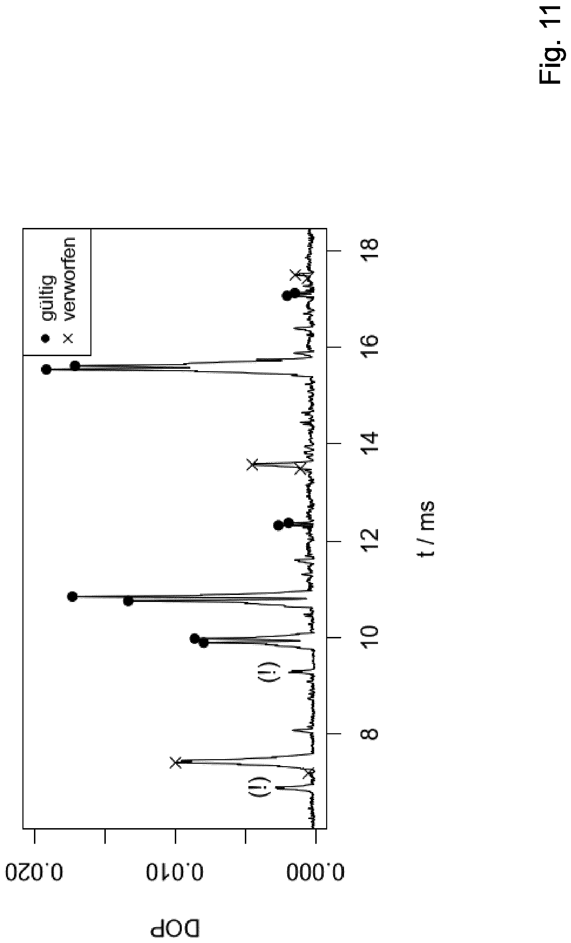

Beispiele für gültige, ungültige und ignorierte Datenpunkte sind in Abbildung 11 zusammengefasst.

Hierzu werden insbesondere die zuvor beschriebene Fehlerwahrscheinlichkeit, das Impuls-Verhältnis und das Vorliegen eines zentralen Minimums betrachtet, was im Folgenden erläutert wird.

Die FAP (engl. false alarm probability - Fehlerwahrscheinlichkeit) gibt an, mit welcher Wahrscheinlichkeit sich ein Punkt im Bildbereich ($DOP(t)$) vom Signalrauschen (Varianz) unterscheidet.

Für die Zwecke des vorliegenden Verfahrens gilt

$$P(A > A_0) \coloneqq p > 0.2$$

dass die Wahrscheinlichkeit $p > 20\%$ für mindestens einen der beiden Peaks sein muss, damit ein gültiger Doppel-Peak erkannt wird. Dies entspricht dem oben beschriebenen Schritt 1360.

Ein Doppel-Peak besteht aus zwei Impulsen. Diese müssen in einem bestimmten Verhältnis (Peak Ratio, $pR$ = 0.75)

$$pR > \frac{\min(\{A1, A2\})}{\max(\{A1, A2\})}$$

stehen, damit eine gut zu klassifizierende Impulsform vorliegt. Der relative Unterschied zwischen den zwei Punkten ist also kleiner als 1 - $pR$ = 25%.

Zwischen den beiden Maxima liegt ein Minimum, das möglichst tief ausgeprägt sein soll, damit es ein signifikanter Peak ist. Die Berechnung des zentralen Minimums

$$\frac{(A3 - \min(DOP(t)))}{\min(\{A1, A2\}) - \min(DOP(t))} < 0.7$$

zeigt, dass die Amplitude des Minimums im Verhältnis zum kleinsten Maximum kleiner als 70% sein muss. Die Verschiebung $min(DOP(t))$ korrigiert den Offset der Zeitreihe.

Zur Auswertung der Rekonstruktion, wie in Fig. 8 gezeigt, welche im Bildbereich $DOP(t)$ die Originaldaten, sowie die rekonstruierte (tiefpass-gefilterte) Funktion zeigt, muss an den Stellen, an denen ein wahrscheinlicher Peak zu finden ist, folgendes gelten:

- genau ein Maximum der $peaks(t)$-Funktion befindet sich im Bereich

$$(t0 - dP) < t < t_0 + dP;$$

und

- es existiert in diesem Bereich kein lokales Minimum,

$$\frac{\mathrm{d}}{\mathrm{d}t} peaks(t) \neq 0 \quad \text{für } \forall t$$

- Dadurch werden Segmente / Bereiche ausgeschlossen, in denen mehrere Peaks vorhanden sind, die zu dicht stehen, die zu breit / verschmiert sind.

Zusammenfassend wird durch Ausführungsformen des erfindungsgemäßen Verfahrens und der erfindungsgemäßen Vorrichtung zunächst der Zeitbereich als reellwertiges Einseitenband-Spektrum eines analytischen Signals aufgefasst, wobei die Phase exakt Null beträgt.

Der transformierte Merkmalsraum, der auch als $\tau$-Raum bezeichnet wird, wird durch die Fourier-Transformation der Ausgangsdaten erhalten, wenn man diese als Spektrum zugrunde legt.

Dabei ist die Zeitreihe ein Zufallsprozess, in dem zu beliebigen Zeitpunkten Partikel erfasst werden. Der zeitliche Abstand zwischen den Partikeln ist wieder ein Zufallsprozess.

Ein schmaler Peak im Zeitbereich wird immer in einen breiten Peak im Merkmalsraum abgebildet, was auf dem Skalierungssatz der Fourier Transformation beruht. Die Fourier Transformation ist dabei invariant gegenüber Verschiebung, wodurch die schmalen Peaks des Zeitbereiches im Merkmalsraum alle symmetrisch auf $\tau$ = 0 rutschen und sich konstruktiv überlagern, was beim Übergang von Figur 5 zu Figur 6 erfolgt.

Es wird dann eine 3 dB-Grenze im Merkmalsraum berechnet, wie in Figur 6 gezeigt, ( $E/E_{max} = 1/\sqrt{2}$ ), was zur Signalbandbreite $bw$ führt, welche mit der mittleren bzw. charakteristischen Breite des Peaks $dP$ verknüpft ist.

Die maximale Amplitude in Figur 5 ist ein Maß für die Anzahl der Partikel. Kann man diese Erhebung vom Rauschen deutlich unterscheiden, so ist die Konzentration hinreichend für eine erfolgreiche Detektion.

Ein Tiefpassfiltern und Rücktransformieren liefert im Zeitbereich eine gefilterte Zeitreihe, welche nun kein reell-wertiges Spektrum mehr darstellt. Vielmehr ist die Phasenlage verstimmt.

An jedem Wendepunkt, aber wenigstens an jeder Nullstelle ist ein Peak zu finden. Hieraus folgt eine Liste der Punkte mit Wendepunkt- oder Nullstellen-Charakteristik.

Zusätzlich wird geprüft ob hier auch ein lokales Maximum des gefilterten Amplitudenbetrags in der Zeitreihe vorliegt.

**Bezugszeichenliste**

| | |
|---|---|
| 100 | Vorrichtung |
| 110 | Detektor |
| 120 | Prozessor |
| 130 | Speicher |
| 1000 | Verfahren |
| 1100 | Verfahrensschritt |
| 1200 | Verfahrensschritt |
| 1210 | Verfahrensschritt |
| 1220 | Verfahrensschritt |
| 1230 | Verfahrensschritt |
| 1235 | Verfahrensschritt |
| 1240 | Verfahrensschritt |
| 1250 | Verfahrensschritt |
| 1310 | Verfahrensschritt |
| 1320 | Verfahrensschritt |
| 1330 | Verfahrensschritt |
| 1340 | Verfahrensschritt |
| 1350 | Verfahrensschritt |
| 1360 | Verfahrensschritt |
| 1370 | Verfahrensschritt |
| 1400 | Verfahrensschritt |
| 1410 | Verfahrensschritt |
| 1420 | Verfahrensschritt |

**Patentansprüche**

1. Verfahren zur Erfassung von Partikeln, umfassend:

   - Erfassen (1100) einer Zeitreihe einer Partikelerfassung;
   - Segmentieren (1200) der Zeitreihe, umfassend:

      - Transformieren (1220) der Zeitreihe in einen transformierten Raum;
      - Tiefpassfiltern (1230) des transformierten Raums; und
      - Rücktransformieren (1250) des transformierten Raums in den Zeitbereich; und

   - Klassifizieren (1300) der Segmente der Zeitreihe, umfassend:

      - Bestimmen (1370) eines Peaks in der Zeitreihe basierend auf dem tiefpassgefilterten rücktransformierten Zeitbereich,

   **dadurch gekennzeichnet, dass**

   das Bestimmen (1370) eines Peaks durch Bestimmen (1340) eines globalen Maximums und eines ersten und eines zweiten lokalen Maximums erfolgt;
   wobei das Bestimmen (1370) eines Peaks durch Bestimmen (1350) eines normierten Abstands zwischen dem globalen Maximum und dem ersten und zweiten lokalen Maximum erfolgt; und
   wobei das Bestimmen (1350) eines normierten Abstands erfolgt durch Bestimmen eines Abstandes durch
   $$\hat{d} = \sqrt{\hat{t}_{\max}^2 - \hat{t}_{l,r}}$$
   , wobei $\hat{d}$ der Abstand, $\hat{t}_{max}$ das globale Maximum und $\hat{t}_{l,r}$ das erste bzw. zweite lokale Maximum ist; und durch Verwerfen desjenigen lokalen Maximums, bei dem der Abstand größer ist.

2. Verfahren (1000) nach Anspruch 1, wobei der Schritt des Segmentierens (1200) weiter den Schritt

   - Erzeugen (1210) eines Einseitenbandspektrums der Zeitreihe umfasst;

   und wobei der Schritt des Transformierens (1220) der Zeitreihe in einen transformierten Raum ein Transformieren des Einseitenbandspektrums der Zeitreihe in einen transformierten Raum umfasst.

3. Verfahren (1000) nach Anspruch 1 oder 2, wobei der Schritt des Rücktransformierens (1250) des transformierten Raums in den Zeitbereich das Verwerfen (1240) des Imaginärteils umfasst.

4. Verfahren (1000) nach einem der vorstehenden Ansprüche, wobei das Klassifizieren (1300) der Segmente der Zeitreihe weiter ein Normalisieren (1330) der Zeitreihe umfasst.

5. Verfahren (1000) nach einem der vorstehenden Ansprüche, wobei das Klassifizieren (1300) der Segmente der Zeitreihe weiter ein Bestimmen (1360) einer Fehlerwahrscheinlichkeit der Zeitreihe umfasst.

**6.** Verfahren (1000) nach einem der vorstehenden Ansprüche,
wobei das Klassifizieren der Segmente der Zeitreihe weiter ein Filtern (1310) und/oder Fenstern (1320) der Zeitreihe umfasst.

**7.** Verfahren (1000) nach einem der vorstehenden Ansprüche,
wobei das Verfahren weiter ein Bestimmen (1410) einer Partikelgröße basierend auf der Amplitude des bestimmten Peaks umfasst.

**8.** Verfahren nach einem der vorstehenden Ansprüche,
wobei das Verfahren weiter ein Bestimmen (1420) einer Partikelgeschwindigkeit basierend auf dem Abstand des bestimmten Peaks umfasst.

**9.** Vorrichtung (100) zur Erfassung eines Partikels, umfassend:

- einen Prozessor (120); und
- einen Speicher (130), in dem Instruktionen hinterlegt sind, die, wenn sie von dem Prozessor (120) ausgeführt werden, ein Verfahren zur Erfassung eines Partikels gemäß einem der vorstehenden Ansprüche 1 bis 8 durchführen.

**Claims**

**1.** A method for detecting particles, comprising:

- detecting (1100) a time series of a particle detection;
- segmenting (1200) the time series, comprising:

  - transforming (1220) the time series into a transformed space;
  - low-pass filtering (1230) the transformed space; and
  - back-transforming (1250) the transformed space into the time domain; and

- classifying (1300) the segments of the time series, comprising:

  - determining (1370) a peak in the time series based on the low-pass filtered back-transformed time domain,

**characterized in that**

the determination (1370) of a peak takes place by determining (1340) a global maximum and a first and a second local maximum;
wherein the determination (1370) of a peak takes place by determining (1350) a normalized distance between the global maximum and the first and second local maximum; and
wherein the determination (1350) of a normalized distance takes place by determining a distance by

$$\hat{d} = \sqrt{\hat{t}_{\max}^2 - \hat{t}_{l,r}}$$

tance by , where $\hat{d}$ is the distance, $\hat{t}_{max}$ is the global maximum and $\hat{t}_{l,r}$ is the first and second local maximum; and by discarding that local maximum at which the distance is greater.

**2.** A method (1000) according to claim 1,
wherein the step of segmenting (1200) further comprises the step

- generating (1210) a single sideband spectrum of the time series;

and wherein the step of transforming (1220) the time series into a transformed space comprises transforming the single sideband spectrum of the time series into a transformed space.

**3.** A method (1000) according to claim 1 or 2,
wherein the step of back-transforming (1250) the transformed space into the time domain comprises discarding (1240) the imaginary part.

**4.** A method (1000) according to any one of the preceding claims,
wherein the classifying (1300) of the segments of the time series further comprises normalizing (1330) the time series.

**5.** A method (1000) according to any one of the preceding claims,
wherein the classifying (1300) of the segments of the time series further comprises determining (1360) an error probability of the time series.

**6.** A method (1000) according to any one of the preceding claims,
wherein the classifying of the segments of the time series further comprises filtering (1310) and/or windowing (1320) the time series.

**7.** A method (1000) according to any one of the preceding claims,
wherein the method further comprises determining (1410) a particle size based on the amplitude of the determined peak.

**8.** A method according to any one of the preceding claims,
wherein the method further comprises determining (1420) a particle velocity based on the distance of the determined peak.

**9.** An apparatus (100) for detecting a particle, comprising:

- a processor (120); and
- a memory (130) in which instructions are stored that, when executed by the processor (120), perform a method for detecting a particle according to any one of the preceding claims 1 to 8.

**Revendications**

**1.** Procédé de détection de particules, consistant à :

- acquérir (1100) une série temporelle d'une détection de particules ;
- segmenter (1200) la série temporelle, consistant à :

- transformer (1220) la série temporelle en un espace transformé ;
- filtrer passe-bas (1230) l'espace transformé ; et
- retransformer (1250) l'espace transformé en le domaine temporel ; et

- classifier (1300) les segments de la série temporelle, consistant à :

- déterminer (1370) un pic dans la série temporelle en se basant sur le domaine temporel filtré passe-bas retransformé,

**caractérisé en ce que**

la détermination (1370) d'un pic est effectuée en déterminant (1340) un maximum global et un premier et un deuxième maximum local ;
la détermination (1370) d'un pic est effectuée en déterminant (1350) une distance normée entre le maximum global et les premier et deuxième maxima locaux ; et
la détermination (1350) d'une distance normée est effectuée en déterminant une distance par

$$\hat{d} = \sqrt{\hat{t}_{max}^2 - \hat{t}_{l,r}}$$

, où $\hat{d}$ est la distance, $\hat{t}_{max}$ est le maximum global, et $\hat{t}_{l,r}$ est le premier ou deuxième maximum local ; et
et en rejetant le maximum local auquel la distance est plus grande.

**2.** Procédé (1000) selon la revendication 1,

dans lequel l'étape de segmentation (1200) comprend en outre l'étape consistant à :

- générer (1210) un spectre à bande latérale unique de la série temporelle ;

et l'étape de transformation (1220) de la série temporelle en un espace transformé consiste à transformer le spectre à bande latérale unique de la série temporelle en un espace transformé.

**3.** Procédé (1000) selon la revendication 1 ou 2, dans lequel l'étape de retransformation (1250) de l'espace transformé en le domaine temporel consiste à rejeter (1240) la partie imaginaire.

**4.** Procédé (1000) selon l'une des revendications précédentes, dans lequel la classification (1300) des segments de la série temporelle consiste en outre à normaliser (1330) la série temporelle.

**5.** Procédé (1000) selon l'une des revendications précédentes, dans lequel la classification (1300) des segments de la série temporelle consiste en outre à déterminer (1360) une probabilité d'erreur de la série temporelle.

**6.** Procédé (1000) selon l'une des revendications précédentes, dans lequel la classification des segments de la série temporelle consiste en outre à filtrer (1310) et/ou à trier (1320) la série temporelle.

**7.** Procédé (1000) selon l'une des revendications précédentes, dans lequel le procédé consiste en outre à déterminer (1410) une taille de particule en se basant sur l'amplitude du pic déterminé.

**8.** Procédé selon l'une des revendications précédentes, dans lequel le procédé consiste en outre à déterminer (1420) une vitesse de particule en se basant sur la distance du pic déterminé.

**9.** Dispositif (100) de détection d'une particule, comprenant :

- un processeur (120) ; et
- une mémoire (130) dans laquelle sont stockées des instructions qui, lorsqu'elles sont exécutées par le processeur (120), mettent en œuvre un procédé de détection d'une particule selon l'une des revendications précédentes 1 à 8.

Fig. 1

```
                    ┌──────────────┐
                    │     1100     │                    1000
                    └──────┬───────┘                  ↙
                           ↓
        ┌──────────────────────────────┐
        │           ┌──────────────┐   │
        │           │     1210     │   │
        │           └──────┬───────┘   │
        │                  ↓           │
        │           ┌──────────────┐   │
        │           │     1220     │   │
        │           └──────┬───────┘   │
        │                  ↓           │
        │           ┌──────────────┐   │
        │           │     1230     │   │
        │           └──────┬───────┘   │
1200    │                  ↓           │
        │           ┌──────────────┐   │
        │           │     1235     │   │
        │           └──────┬───────┘   │
        │                  ↓           │
        │           ┌──────────────┐   │
        │           │     1240     │   │
        │           └──────┬───────┘   │
        │                  ↓           │
        │           ┌──────────────┐   │
        │           │     1250     │   │
        │           └──────┬───────┘   │
        └──────────────────┼───────────┘
                           ↓
        ┌──────────────────────────────┐
        │           ┌──────────────┐   │
        │           │     1310     │   │
        │           └──────┬───────┘   │
        │                  ↓           │
        │           ┌──────────────┐   │
        │           │     1320     │   │
        │           └──────┬───────┘   │
        │                  ↓           │
        │           ┌──────────────┐   │
        │           │     1330     │   │
        │           └──────┬───────┘   │
1300    │                  ↓           │
        │           ┌──────────────┐   │
        │           │     1340     │   │
        │           └──────┬───────┘   │
        │                  ↓           │
        │           ┌──────────────┐   │
        │           │     1350     │   │
        │           └──────┬───────┘   │
        │                  ↓           │
        │           ┌──────────────┐   │
        │           │     1360     │   │
        │           └──────┬───────┘   │
        │                  ↓           │
        │           ┌──────────────┐   │
        │           │     1370     │   │
        │           └──────┬───────┘   │
        └──────────────────┼───────────┘
                           ↓
        ┌──────────────────────────────┐
        │           ┌──────────────┐   │
        │           │     1410     │   │
1400    │           └──────┬───────┘   │
        │                  ↓           │
        │           ┌──────────────┐   │
        │           │     1420     │   │
        │           └──────────────┘   │
        └──────────────────────────────┘
```

Fig. 2

Fig. 3

Fig. 4

Fig. 5

Fig. 6

Fig. 7

Fig. 8

Fig. 9

Fig. 10

EP 4 368 966 B1

Fig. 11

**IN DER BESCHREIBUNG AUFGEFÜHRTE DOKUMENTE**

**In der Beschreibung aufgeführte Patentdokumente**

- DE 102019209213 A1
- US 20110221892 A1
- US 20170322137 A1
- US 20220003657 A1
- US 20170191923 A1